# Europäisches Patentamt

# European Patent Office

# Office européen des brevets

(19)

(11) Veröffentlichungsnummer: **0 052 740**
**B1**

(12) ## EUROPÄISCHE PATENTSCHRIFT

(45) Veröffentlichungstag der Patentschrift:
09.05.84

(51) Int. Cl.³: **C 08 L 59/02**, C 08 G 12/42

(21) Anmeldenummer: **81108207.2**

(22) Anmeldetag: **12.10.81**

(54) **Polyacetale mit erhöhter Dauergebrauchstemperatur.**

(30) Priorität: **24.11.80 DE 3044118**

(43) Veröffentlichungstag der Anmeldung:
**02.06.82 Patentblatt 82/22**

(45) Bekanntmachung des Hinweises auf die Patenterteilung:
**09.05.84 Patentblatt 84/19**

(84) Benannte Vertragsstaaten:
**BE DE FR GB IT NL**

(56) Entgegenhaltungen:
**DE - B - 1 243 873**
**DE - B - 1 282 952**
**DE - B - 2 540 207**
**GB - A - 2 004 285**

(73) Patentinhaber: **BASF Aktiengesellschaft,
Carl-Bosch-Strasse 38, D-6700 Ludwigshafen (DE)**

(72) Erfinder: **Schuette, Wilhelm, Dr., Frankstrasse 5,
D-6720 Speyer (DE)**
Erfinder: **Hilt, Albrecht, Dr., Stiftstrasse 19,
D-6700 Ludwigshafen (DE)**
Erfinder: **Walter, Manfred, Dr., Hans-Purrmann-Allee 18,
D-6720 Speyer (DE)**
Erfinder: **Boehlke, Klaus, Dr.,
Gerhart-Hauptmann-Strasse 53, D-6711 Hessheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Polyacetale, die gegen die Einwirkung von Wärme im Temperaturbereich von 100–150°C über einen längeren Zeitraum, stabilisiert sind.

Es ist Stand der Technik, Polyacetale gegen oxidativen Angriff zu stabilisieren. Zu diesem Zweck werden Antioxidantien wie sterisch gehinderte Phenolderivate eingesetzt. Solche Phenolderivate sind z.B. in der DOS 27 02 661 zusammengestellt.

Es ist weiter bekannt, Polyacetale gegen den Abbau bei erhöhter Temperatur zu schützen. Solche Stabilisatoren, die in der Literatur gewöhnlich als Wärmestabilisatoren bezeichnet werden, sind z.B. Carbonsäureamide, hochmolekulare Polyamide, niedermolekulare, endgruppenverkappte Polyamide (US-PS 3 960 984), Amidin-Verbindungen (DE-AS 1 285 736), vernetzte, wasserunlösliche Melamin-Formaldehyd-Polykondensate (DE-AS 25 40 207), Metallsalze aliphatischer, hydroxysubstituierter Carbonsäuren (DE-AS 1 669 840), Kondensationsprodukte aus Diamiden von Dicarbonsäuren, N,N'-Alkylharnstoffen und Formaldehyd (DE-AS 1 669 692), Harnstoffe, Thioharnstoffe, Hydrazine, Hydrazide, Polyvinylpyrrolidon u.v.a.m. Ferner können Polyacetale noch weitere Stabilisatoren gegen Licht und UV-Strahlung enthalten.

Die nach dem Stande der Technik stabilisierten Polyacetale haben eine Dauergebrauchstemperatur von nur 100°C, obwohl der Kristallitschmelzpunkt bei 167°C liegt. Bei anderen Kunststoffen wie z.B. Polystyrol ist die Differenz zwischen Glastemperatur und Dauergebrauchstemperatur wesentlich geringer.

So erfolgt z.B. bei der Wärmelagerung bei 140°C im Umluftofen ein Abbau des Molekulargewichtes des Polyacetals in der Form, dass nach 56 Tagen Lagerzeit sich der Meltindex in etwa verdoppelt hat. Entsprechend diesem Molekulargewichtsabbau wird auch das mechanische Niveau erniedrigt. Daher können Polyacetale überall dort nicht eingesetzt werden, wo über eine längere Zeit höhere Temperaturen zu erwarten sind.

In der US-PS 3 313 767 wird vorgeschlagen, u.a. Hexamethoxymethylmelamin und Trimethoxymethylmelamin als Stabilisatoren zu Oxymethylenpolymeren zuzusetzen. Nach der DE-AS 1 243 873 werden im Beispiel 4 mit Butanol veretherte Melamin-Formaldehyd-Harze verwendet. Es hat sich gezeigt, dass derartige vollständig veretherte Melaminharze nicht in der Lage sind, die Dauergebrauchstemperaturen von Polyacetalen zu verbessern. In der deutschen Patentanmeldung P 29 21 167 wird vorgeschlagen, glasfaserverstärkten Polyoxymethylen-Formmassen zur Verbesserung der Schlagzähigkeit Alkoxymethylmelamine zuzusetzen.

Keiner der bisher vorgeschlagenen und in der Praxis eingesetzten Stabilisatoren und Antioxidantien war bisher in der Lage, diesen Molekulargewichtsabbau bei höheren Temperaturen zu unterbinden. Der Erfindung lag nun die Aufgabe zu Grunde, einen Stabilisator zu finden, der das Polyacetal gegen den Molekulargewichtsabbau bei Temperaturen zwischen 100 und 150°C schützt.

Es wurde nun überraschend gefunden, dass durch den Zusatz spezieller methylolierter und teilveretherter Melamin-Formaldehydharze dieser Molekulargewichtsabbau bei höherer Temperatur vermieden werden kann.

Gegenstand der Erfindung sind demzufolge Polyacetal-Formmassen, die als Stabilisator 0,1 bis 10 Gew.-% eines Melamin-Formaldehydkondensats mit einem mittleren Polymerisationsgrad von 1,2 bis 6,0, vorzugsweise 1,5 bis 5,0, und einen Melamin:Formaldehyd-Verhältnis von 1:2 bis 1:5,5, vorzugsweise 1:3 bis 1:5 enthalten, welches mit einem $C_1$- bis $C_4$-Alkanol, vorzugsweise mit Methanol, derart teilverethert ist, dass das Verhältnis Melamin:Ether-Rest zwischen 1:1,5 und 1:5,0, vorzugsweise zwischen 1:2 und 1:4, und das Verhältnis Melamin:freie Methylolgruppen zwischen 1:0,5 und 1:3, vorzugsweise zwischen 1:0,8 und 1:2 liegt.

Die Melaminharze sind im allgemeinen wasser- und alkohollöslich und werden auch als solche Lösungen dem Polyacetal zugesetzt. Den genannten Polymerisationsgraden (Zahlenmittel) entsprechenden Molekulargewichte von etwa 200 bis 3000, vorzugsweise von etwa 300 bis 1800.

Polyacetale im Sinn der Erfindung sind insbesondere makromolekulare Copolymerisate des Trioxans mit 0,01 bis 20 und insbesondere 0,1 bis 5 Molprozent der Gesamtmonomeren solcher copolymerisierbarer Verbindungen, die wiederkehrende Alkylen- und insbesondere Oxyalkylen-Einheiten mit mindestens zwei und bevorzugt 2 bis 4 benachbarten Kohlenstoffatomen in die Polymerisatkette einführen, z.B. mit entsprechend aufgebauten zyklischen Acetalen oder zyklischen Ethern, insbesondere mit 3 bis 8 Kohlenstoffatomen, wie Ethylenoxid, 1,3-Dioxolan, 1,3-Dioxan, 2-Methoxymethyldioxolan, Butandiol- 1,4-formal oder Diglykolformal, oder mit linearen Polyacetalen mit wiederkehrenden Acetalgruppen in der Molekülhauptkette, wie Polydioxolan und insbesondere Polyformalen.

Der Zusatz von 0,1 bis 10% bevorzugt 0,25 bis 5% eines methylolierten und teilveretherten Melamin-Formaldehyd-Harzes zu einem in üblicher Weise stabilisierten Polyacetal führt dazu, dass bei Wärmelagerung des Polyoxymethylens bei Temperaturen von 100 bis 150°C der Molekulargewichtsabbau des Polyacetals nicht mehr oder nur noch in sehr verminderter Form erfolgt.

Neben dem Melamin-Formaldehydharz enthält das Copolymere vorzugsweise übliche Antioxidantien und übliche Wärmestabilisatoren. Auf den diesbezüglichen Stand der Technik wurde eingangs hingewiesen. Ferner kann das Polyacetal Nukleierungsmittel, Farbstoffe oder Füllstoffe, beispielsweise Glasfasern, enthalten.

In das Polyacetal kann das erfindungsgemässe Melamin-Formaldehydharz unter Verwendung üblicher Verarbeitungsmaschinen wie z.B. Extruder bei Temperaturen von 180 bis 240°C eingearbeitet werden. Man verwendet bevorzugt ein Copolymerisat, bei dem die instabilen Endgruppen durch hydrolytischen oder thermischen Abbau entfernt worden sind und das in Pulver- oder Granulatform vorliegt. Das Melamin-Formaldehydharz kann aber auch vor dem thermischen Abbau zum Rohpolymerisat zugemischt werden und beim thermischen Abbauschritt in das Copolymere eingearbeitet werden.

Die erfindungsgemäss stabilisierten Polyacetale lassen sich wiederholt aus der Schmelze verarbeiten, ohne dass ein Abbau im Molekulargewicht eintritt und ohne dass eine Verfärbung erfolgt. Sie eignen sich besonders gut zur Herstellung von Formkörpern, die in der Technik bei höheren Umgebungstemperaturen zum Einsatz kommen.

In den Beispielen werden folgende Stabilisatoren eingesetzt:

A. Als Antioxidans in allen Beispielen: 0,3% 1,6-Hexandiol-bis-3-(3,5-di-tert.-butyl-4-hydroxyphenyl)-propionat (®Irganox 259 der Ciba-Geigy).
B. Als Wärmestabilisatoren:
B 1: 0,4% eines Kondensationsproduktes aus Isophthalsäurediamid, Ethylenharnstoff und Formaldehyd nach Beispiel 1 der DE-AS 1 669 692.
B 2: 0,1% eines endgruppenverkappten niedermolekularen Polyamids nach US-PS 3 960 984.
C. Als Melaminharze:
C 1: Ein Melamin-Formaldehyd-Polykondensat nach Beispiel 1 der DE-AS 25 40 207
C 2: Hexamethoxymethylmelamin
C 3: ein mit Methanol teilverethertes Melamin-Formaledehyd-Kondensationsprodukt mit einem mittleren Polymerisationsgrad (Zahlenmittel) von 1.9, einem Melamin-Formaldehyd-Verhältnis von 1:3,4, einem Verhältnis Melamin: Ether-Reste von 1:2,2 und einem Verhältnis Melamin:Methylolgruppen von 1:0,9.

C 4: ein mit Methanol verethertes Melamin-Formaldehyd-Kondensationsprodukt mit einem mittleren Polymerisationsgrad (Zahlenmittel) von 2,5, einem Melamin:Formaldehyd-Verhältnis von 1:4,2, einem Verhältnis Melamin:Ether-Reste von 1:2,9, einem Verhältnis Melamin:Methylolgruppe von 1:1,3.

Die in den Beispielen genannten Teile und Prozente beziehen sich auf das Gewicht. Die Versuche 4, 5, 7, 8, 9, 10 und 12 sind erfindungsgemäss.

Beispiel 1
Ein Polyacetal-Rohpolymerisat aus 97,3% Trioxan und 2,7% Butandiolformal, das noch ca. 3% nicht umgesetztes Trioxan und ca. 5% instabile Anteile enthielt, wurde in einem Trockenmischer mit Antioxidans und Wärmestabilisator sowie ggf. einem Melaminharz innig vermischt. Diese Mischung wurde anschliessend auf einem Entgasungsextruder bei 220°C von den flüchtigen Anteilen befreit und granuliert. Von diesem Granulat wurden dann Kleinnormstäbe (gemäss DIN 53 453) gespritzt. Diese wurden dann in einem Umluftschrank bei 140°C bis zu 56 Tagen gelagert. Nach den angegebenen Lagerzeiten wurde ein Teil der Kleinnormstäbe entnommen. Von diesen Proben wurde jeweils der Meltindex nach DIN 53 735 [2,16 kg, 190°C, 10'] als Mass für das Molekulargewicht bestimmt. Die erhaltenen Messwerte sind in Tabelle 1 angegeben.

Beispiel 2
Das Polyacetal-Rohpolymerisat nach Beispiel 1 wurde in einem Trockenmischer mit Antioxidans, Wärmestabilisator und ggf. dem erfindungsgemässen, verethertem Melamin-Formaldehydharz innig vermischt. Diese Mischung wurde anschliessend auf einem Entgasungsextruder von den flüchtigen Anteilen befreit und granuliert. Das Granulat wurde dann anschliessend noch viermal bei 220°C über einen Zweiwellen-Extruder gegeben. Nach jeder Extrusion wurde der Meltindex gemessen. Die Ergebnisse sind in Ta-belle 2 zusammengestellt.

Tabelle 1

| Versuch | Wärmestab. | Melaminharz | Meltindex | | | | |
|---|---|---|---|---|---|---|---|
| | | | Beginn | 14d | 28d | 42d | 56d |
| 1 | B 1 | – | 13,2 | 14,2 | 16,6 | 21,3 | 29,7 |
| 2 | B 1 | 1% C 1 | 14,6 | 16,2 | 19,2 | 19,3 | 25,0 |
| 3 | B 1 | 1% C 2 | 13,6 | | 18,2 | | 29,3 |
| 4 | B 1 | 1% C 3 | 11,3 | 9,3 | 9,5 | 9,6 | 10,3 |
| 5 | B 1 | 1% C 4 | 11,5 | 9,8 | 9,7 | 9,5 | 9,5 |
| 6 | B 2 | – | 12,3 | | 15,6 | | 22,9 |
| 7 | B 2 | 0,25% C 3 | 11,6 | 11,5 | 11,6 | 12,0 | 12,7 |
| 8 | B 2 | 0,5% C 3 | 11,4 | 11,2 | 11,1 | 11,5 | 11,9 |
| 9 | B 2 | 1% C 3 | 11,4 | 9,4 | 9,5 | 9,7 | 9,8 |
| 10 | B 2 | 5% C 3 | 11,0 | 7,3 | 6,7 | 6,3 | 6,1 |

Tabelle 2

| Versuch | Wärmestab. | Melaminharz | Meltindex nach Extrusionen | | | | |
|---------|-----------|-------------|------|------|------|------|------|
| | | | 1mal | 2mal | 3mal | 4mal | 5mal |
| 11 | B 2 | – | 11,3 | 11,7 | 12,3 | 12,8 | 13,3 |
| 12 | B 2 | 1% C 3 | 10,5 | 9,8 | 9,5 | 9,4 | 9,3 |

## Patentansprüche

1. Polyacetal-Formmassen, die ein Melaminharz als Stabilisator enthalten, dadurch gekennzeichnet, dass sie 0,1 bis 10 Gew.-% eines Melamin-Formaldehydkondensats mit einem mittleren Polymerisationsgrad von 1,2 bis 6,0, vorzugsweise 1,5 bis 5,0 und einem Melamin:Formaldehyd-Verhältnis von 1:2 bis 1:5,5, vorzugsweise 1:3 bis 1:5 enthalten, welches mit einem $C_1$- bis $C_4$-Alkanol derart teilverethert ist, dass das Verhältnis Melamin:Ether-Rest zwischen 1:1,5 und 1:5,0, vorzugsweise zwischen 1:2 und 1:4, und das Verhältnis Melamin:freie Methylolgruppen zwischen 1:0,5 und 1:3, vorzugsweise zwischen 1:0,8 und 1:2 liegt.

2. Polyacetal-Formmassen nach Anspruch 1, dadurch gekennzeichnet, dass sie ausser dem Melamin-Formaldehyd-Kondensat noch übliche Antioxidantien und Wärmestabilisatoren enthalten.

## Revendications

1. Matières à mouler à base de poly-acétals, contenant une résine de mélamine comme stabilisant, caractérisées en ce qu'elles contiennent entre 0,1 et 10% en poids d'un condensat mélamine-formaldéhyde avec un rapport mélamine-formaldéhyde de 1:2 à 1:5,5 et de préférence de 1:3 à 1:5 et un degré moyen de polymérisation de 1,2 à 6,0, partiellement éthérifié par un alcanol en $C_1$ à $C_4$ jusqu'à un rapport mélamine-reste éther compris entre 1:1,5 et 1:5,0 et de préférence entre 1:2 et 1:4 et un rapport mélamine-groupes méthylol libres compris entre 1:0,5 et 1:3 et de préférence entre 1:0,8 et 1:2.

2. Matières à mouler à base de poly-acétals suivant la revendication 1, caractérisées en ce qu'elles contiennent, à côté du condensat mélamine-formaldéhyde, des antioxygènes et agents de stabilisation à la chaleur usuels.

## Claims

1. A polyacetal molding material stabilized with a melamine resin, which molding material contains from 0.1 to 10% by weight of a melamine-formaldehyde condensate which has a mean degree of polymerization of from 1.2 to 6.0, preferably from 1.5 to 5.0, and a ratio of melamine to formaldehyde of from 1:2 to 1:5.5, preferably from 1:3 to 1:5, and which is partially etherified with a $C_1$-$C_4$-alkanol in such a manner that the ratio of melamine to ether radicals is from 1:1.5 to 1:5.0, preferably from 1:2 to 1:4, and the ratio of melamine to free methylol groups is from 1:0.5 to 1:3, preferably from 1:0.8 to 1:2.

2. A polyacetal molding material as claimed in claim 1, which, in addition to the melamine-formaldehyde condensate, contains conventional antioxidants and heat stabilizers.